# EUROPÄISCHE PATENTANMELDUNG

(11) **EP 2 348 263 A2**
(43) Veröffentlichungstag der Anmeldung: **27.07.2011**
(21) Anmeldenummer: 10014825.3
(22) Anmeldetag: 22.11.2010
(51) Int. Cl.: F24J 2/52, H01L 31/042

(54) **Profilelement zur Befestigung von Solarzellen und Solarzellenmodul**

(30) Priorität: 22.01.2010 DE 102010005570
(71) Anmelder: VM Edelstahltechnik GmbH, 58840 Plettenberg (DE)
(72) Erfinder: Mächtle, Daniel, 58840 Plettenberg (DE)
(74) Vertreter: Jakelski, Joachim

(57) **Zusammenfassung**

Ein Profilelement (100) zur Befestigung von Solarzellen (400), insbesondere Fotovoltaikelementen, ist durch wenigstens einen der Solarzelle (400) zugewandten Auflagebereich und einen vorzugsweise an diesen angrenzenden Klebebereich gekennzeichnet.

## Beschreibung

Die Erfindung betrifft ein Profilelement zur Befestigung von Solarzellen, insbesondere Fotovoltaikelementen, und ein Solarzellenmodul nach den Oberbegriffen der unabhängigen Ansprüche.

### Stand der Technik

Solarzellen, insbesondere Fotovoltaikelemente zur Stromerzeugung, die auf Dächern montiert werden, weisen sehr häufig einen das Fotovoltaikelement umschließenden Rahmen auf. Das Entsprechende gilt auch für elektrothermische Solarmodule. Der am Rande umlaufende Rahmen erweist sich dabei als störender Schmutzfänger. So läuft beispielsweise Regenwasser aufgrund dieses Rahmens und der Schräganordnung der Solarelemente nicht vollständig ab, sodass am unteren Ende des Rahmens aufgrund der Schrägstellung der Solarelemente sehr oft Stauwasser gebildet wird, welches trüb sein kann und Schmutzränder hinterlässt, die die Sonneneinstrahlung beeinträchtigen. Ein fotovoltaisches Solarzellenmodul mit einem derartigen Rahmen geht beispielsweise aus der EP 0 500 066 B1 hervor. Ein elektrothermisches Solarmodul mit einem umlaufenden Rahmen ist aus der DE 20 2006 018 592 U1 bekannt.

Der Erfindung liegt nun die Aufgabe zugrunde, ein Profilelement zur Befestigung von Solarzellen und ein Solarzellenmodul zu vermitteln, welches die vorgenannten Nachteile beseitigt und einen auf einfache Weise herstellbaren bündigen Abschluss der Solarzelle mit dem umlaufenden Rahmen ermöglicht, der eine Schmutzansammlung der vorbeschriebenen Art nicht zulässt.

### Offenbarung der Erfindung

### Vorteile der Erfindung

Diese Aufgabe wird gelöst durch ein Profilelement zur Befestigung von Solarzellen mit den Merkmalen des Anspruchs 1 sowie durch ein Solarzellenmodul mit den Merkmalen des Anspruchs 10.

Durch die Ausbildung eines der Solarzelle zugewandten Auflagebereichs und eines vorzugsweise an diesen angrenzenden Klebebereichs, ist eine flächenbündige Befestigung der Solarzelle an dem Profilelement möglich. Die Befestigung - und dies ist der entscheidende Vorteil - erfolgt dabei durch eine Klebeverbindung. Durch diese Klebeverbindung sind die Solarzelle randseitig umgreifende Profilelemente oder dergleichen überflüssig.

Durch die in den abhängigen Ansprüchen aufgeführten Maßnahmen sind jeweils vorteilhafte Weiterbildungen und Verbesserungen des in dem unabhängigen Anspruch 1 angegebenen Profilelements sowie des in dem unabhängigen Anspruch 10 angegebenen Solarzellenmoduls möglich.

So sieht eine vorteilhafte Ausgestaltung des Profilelements beispielsweise vor, dass der Auflagebereich und der Klebebereich durch eine der Solarzelle zugewandte U-förmige Nut gebildet werden, wobei ein der Solarzelle zugewandter U-Schenkel eine etwas kleinere Höhe aufweist und so eine Auflage für die Solarzelle bildet, während der der Solarzelle abgewandte U-Schenkel eine Höhe aufweist, die der Höhe des der Solarzelle zugewandten Schenkels kleinerer Höhe plus der Dicke der Solarzelle im Wesentlichen entspricht.

Durch diese Ausbildung einer U-förmigen Nut mit unterschiedlicher Schenkelhöhe wird ermöglicht, dass die Solarzelle auf dem U-Schenkel kleinerer Höhe aufliegt.

Bevorzugt ist der U-Schenkel kleinerer Höhe an seiner Oberseite abgerundet. An dieser abgerundeten Oberseite liegt die empfindliche Solarzelle besonders schonend auf.

Dabei ist bevorzugt vorgesehen, dass in die U-förmige Nut eine Klebe- und Dichtmasse einbringbar ist. Die Solarzelle liegt damit auf dem U-Schenkel kleinerer Höhe auf und ragt in den Bereich der U-förmigen Nut, in die die Klebe- und Dichtmasse eingebracht ist, durch welche sie abdichtend an dem Profilelement befestigbar ist.

Das Profilelement weist auf seiner in Vertikalrichtung gesehen dem Solarelement abgewandten, das heißt unteren Seite, eine Befestigungsnut zur Aufnahme von vorzugsweise klemmenden Befestigungselementen auf.

Die Profilelemente sind im Wesentlichen gerade Profile, die bevorzugt aus Aluminium bestehen. Sie können auch aus Stahl bestehen. Diese Profilelemente werden durch Eckelemente gleicher Profilierung miteinander zu einem geschlossenen Rahmen verbunden. Die Eckelemente sind bevorzugt Spritzgussteile. Ein derartiger Profilelementrahmen bildet das Grundgerüst für die Aufnahme der Solarzelle, insbesondere des Fotovoltaikelements.

Das erfindungsgemäße Solarzellenmodul ist durch einen aus diesen Profilelementen gebildeten Rahmen und ein Fotovoltaikelement gekennzeichnet, das auf dem rahmenförmig umlaufenden Auflagebereich aufliegt und durch die in den angrenzenden Klebebereich eingebrachte Klebe-/Dichtmasse an den Profilelementen befestigt ist. Nach der Befestigung der Solarzelle, insbesondere des Fotovoltaikelements, an dem aus den Profilelementen gebildeten Rahmen, stellt dieses Solarzellenmodul ein kompaktes, als Ganzes handhabbares Element dar, welches mittels der Befestigungsnut der Profilelemente auf entsprechenden Trägern befestigbar ist.

Der Rahmen ist dabei gemäß einer bevorzugten Ausführungsform so gebildet, dass die Solarzelle auf dem U-Schenkel kleinerer Höhe der U-förmigen Nut aufliegt, wobei die Maße des Rahmens so gewählt sind, dass die Solarzelle in den U-förmigen Bereich der Nut, der als Klebebereich dient, hineinragt, und dort mittels der Klebe-/Dichtmasse an dem Rahmen befestigt ist.

Bevorzugt ist dabei vorgesehen, dass zwischen dem der Solarzelle abgewandten Schenkel und der äußeren Kante der Solarzelle ein Spalt vorgebbarer Dicke vorgesehen ist, der durch die Klebe-/Dichtmasse komplett ausgefüllt wird. Auf diese Weise wird einer unterschiedlichen Längenausdehnung von Solarzelle und Rahmen aufgrund von Temperatureinflüssen Rechnung getragen. Da die Solarzelle, insbesondere das Fotovoltaikelement, nämlich einen anderen Längenausdehnungskoeffizienten aufweist als der beispielsweise aus Aluminium bestehende und aus den Profilelementen gebildete Rahmen, wird durch den so umlaufenden Spalt ein Ausgleich der unterschiedlichen Längenausdehnung ermöglicht. Durch die den Spalt komplett ausfüllende Klebe- und Dichtmasse, die elastisch ist, wird verhindert, dass sich Schmutz, Wasser und dergleichen in dem Spalt sammeln kann.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: schematisch eine isometrische Darstellung einer Ecke eines aus erfindungsgemäßen Profilelementen gebildeten Rahmens;
- Figur 2: die Befestigung zweier aneinandergrenzender, auf einem Grundprofil befestigter Profilelemente in isometrischer Darstellung;
- Figur 3: die Anordnung eines Profilelements auf einem Grundprofil in isometrischer Darstellung;
- Figur 4: eine Seitenansicht eines erfindungsgemäßen Profilelements;
- Figur 5: eine isometrische Darstellung eines erfindungsgemäßen Profilelements;
- Figur 6: eine Seitenansicht einer weiteren Ausführungsform eines erfindungsgemäßen Profilelements;
- Figur 7: eine isometrische Darstellung des erfindungsgemäßen Profilelements aus Figur 6;
- Figur 8: die Anordnung der weiteren Ausführungsform des erfindungsgemäßen Profilelements auf einem Grundprofil in isometrischer Darstellung;
- Figur 9: die Anordnung zweier aneinandergrenzender erfindungsgemäßer Profilelemente gemäß der weiteren Ausführungsform auf einem Grundprofil in isometrischer Darstellung;
- Figur 10: eine isometrische Darstellung eines Eckverbindungselements für die erfindungsgemäßen Profilelemente gemäß der weiteren Ausführungsform;
- Figur 11: ein erfindungsgemäßes Solarzellenmodul in isometrischer Ansicht von schräg unten und
- Figur 12: das erfindungsgemäße Solarzellenmodul aus Figur 11 in einer Ansicht von schräg oben.

### Ausführungsformen der Erfindung

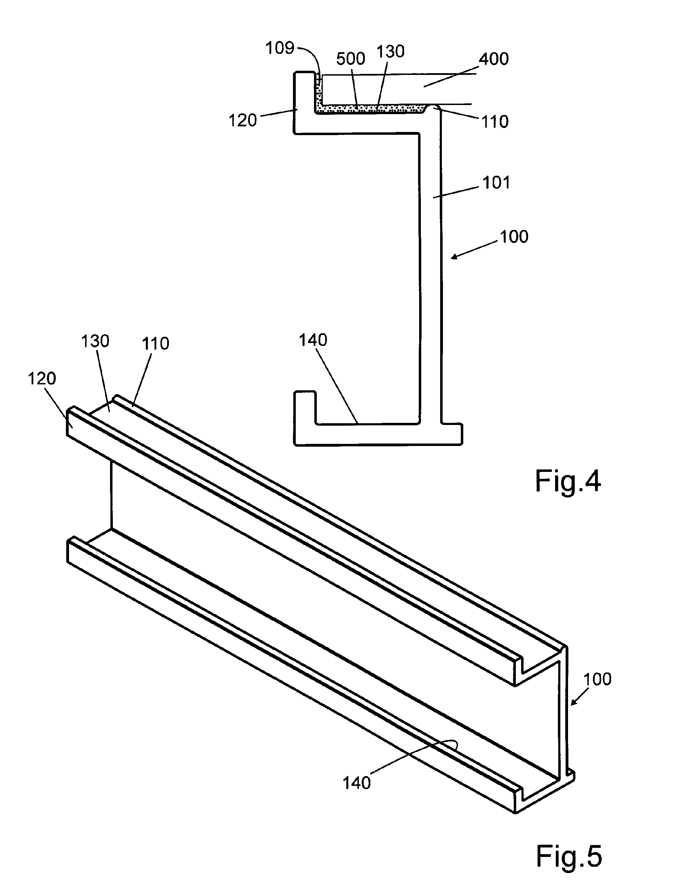

Ein als Ganzes mit 100 bezeichnetes Profilelement, das beispielsweise aus Aluminium besteht, aber auch aus Stahl bestehen kann, dargestellt in den Figuren und insbesondere in den Figuren 4 und 5, weist einen Träger 101 auf, an dessen oberer, einer später zu montierenden Solarzelle 400 zugewandten Seite, ein Auflagebereich und ein Klebebereich angeordnet sind und an dessen unterem, der Solarzelle abgewandten Bereich eine Befestigungnut 140 angeordnet ist, die der Befestigung des Profilelements auf nachfolgend noch näher zu beschreibende Weise dient.

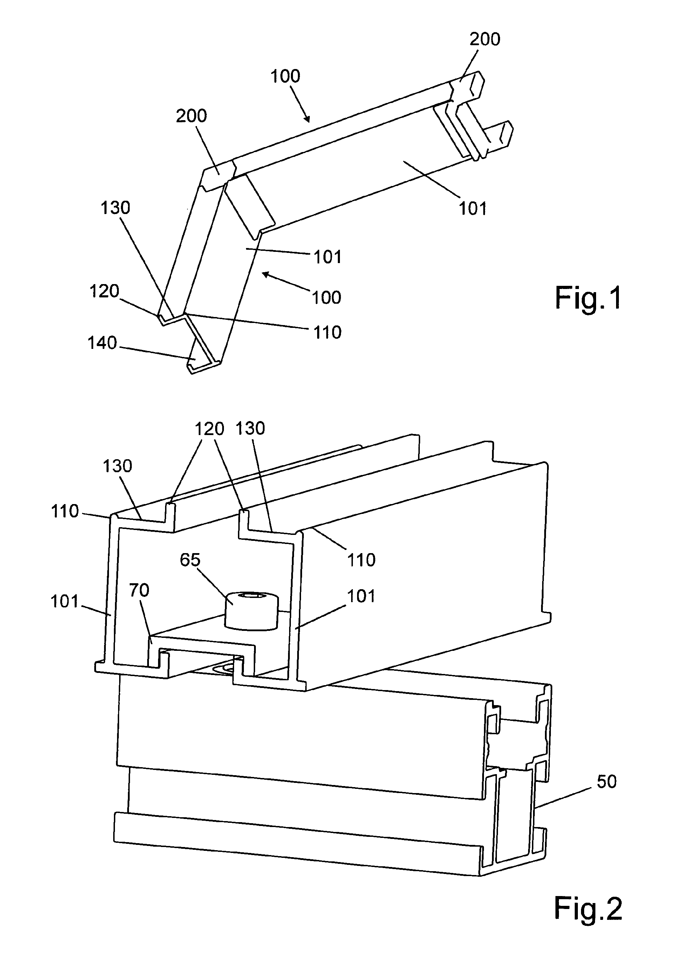

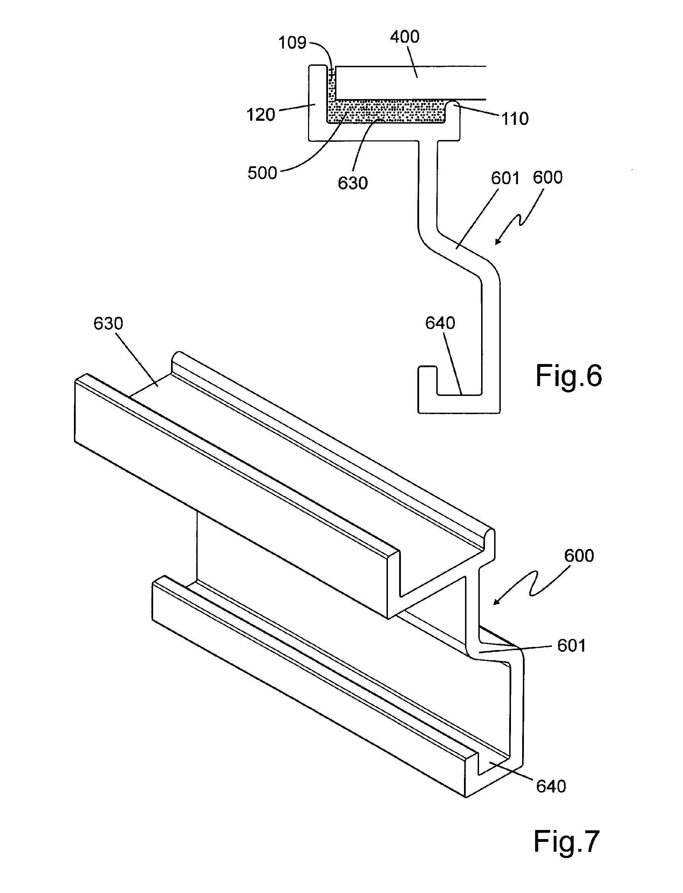

Der Auflagebereich und der an diesen angrenzende Klebebereich wird durch eine U-förmige Nut 130 gebildet. Der der Solarzelle 400 zugewandte U-Schenkel 110 weist dabei eine kleinere Höhe auf als der der Solarzelle abgewandte äußere U-förmige Schenkel 120. Der U-förmige Schenkel kleinerer Höhe 110, der an seiner Oberseite bevorzugt abgerundet ist, bildet einen Auflagebereich für die Solarzelle 400. Der der Solarzelle abgewandte äußere U-förmige Schenkel weist eine Höhe auf, die der Höhe des der Solarzelle zugewandten U-förmigen Schenkels 110 plus der Dicke der Solarzelle 400 im Wesentlichen entspricht. Auf diese Weise schließt die Solarzelle 400 bündig mit der Oberseite des äußeren U-förmigen Schenkels 120 ab, wobei zwischen dem U-förmigen Schenkel 120 und der Solarzelle 400 ein Spalt 109 geringer Breite vorgesehen ist, wie es in Figur 4 ebenfalls schematisch dargestellt ist. Dieser Spalt 109 dient dem Ausgleich unterschiedlicher Längenausdehnungen aufgrund von Temperatureinflüssen von Solarzelle 400 und einem noch näher zu beschreibenden Rahmen aus Profilelementen 100. Die Solarzelle wird durch Einbringen einer insbesondere elastischen Klebe- und Abdichtmasse 500 in die U-förmige Nut 130 an dem Profilelement 100 befestigt. Dabei wird genau soviel Klebe- und Abdichtmasse in die U-förmige Nut eingebracht, dass durch Auflegen der Solarzelle 400 ein Teil der Klebe- und Abdichtmasse 500 verdrängt wird und in dem Spalt 109 zwischen U-förmigem Schenkel 120 und dem äußeren Rand der Solarzelle 400 aufsteigt und den Spalt 109 vollständig ausfüllt. Etwaige an der Oberseite des Spalts 109 überstehende Reste der Klebe- und Abdichtmasse 500 werden mit Hilfe entsprechender Spachteln, Rakeln oder dergleichen abgezogen, sodass eine (vollständig) bündige Verbindung zwischen Profilelement 100 und Solarzelle 400 hergestellt wird. Auf diese Weise entsteht ein, schematisch in Figur 6 dargestelltes Solarzellenmodul, welches als Ganzes handhabbar ist. Ein Eckbereich eines Rahmens, gebildet aus Profilelementen 100 und Verbindungselementen 200, die genauso profiliert sind wie die Profilelemente 100, also ebenfalls eine U-förmige Nut aufweisen mit U-förmigen Schenkeln unterschiedlicher Höhe und an ihrer Unterseite eine Befestigungsnut, ist in Figur 1 schematisch dargestellt.

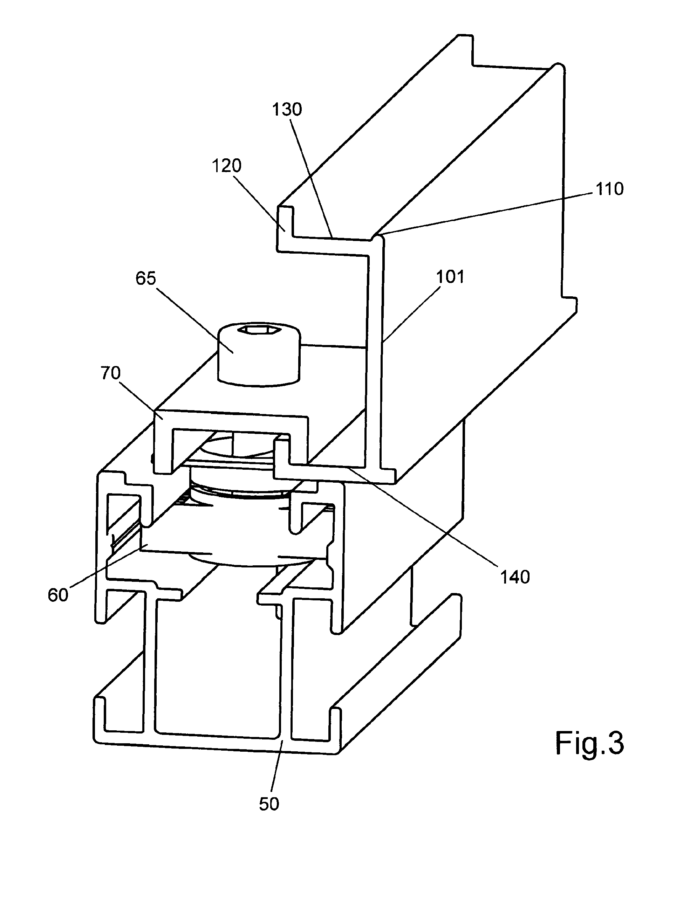

Die Befestigung der Profilelemente auf einem an sich bekannten Befestigungsprofil 50 ist schematisch in den Figuren 2 und 3 dargestellt. Die Profilelemente 100 werden an einem an dem Befestigungsprofil 50 mittels einer an sich bekannten Käfigmutter 60 und einer Schraube 65 mithilfe eines Klemmelementes 70 befestigt, welches in die Befestigungsnut 140 des Profilelementes eingreift, wie es schematisch in Figur 2 und Figur 3 dargestellt ist, wobei Figur 2 sich gegenüberliegende Profilelemente zeigt, die beide gleichzeitig durch das U-förmig gebildete Befestigungselement 70, das mit seinen U-Schenkeln nach unten gerichtet, in die beiden Befestigungsnuten 140 der Profilelemente eingreift. Die Figuren 2 und 3 zeigen darüber hinaus, dass die Profilelemente 100 sowohl parallel zum Befestigungsprofil 50 als auch senkrecht zu diesem angeordnet werden können.

Aus den Figuren 6 bis 12 geht eine weitere bevorzugte Ausführungsform des erfindungsgemäßen Profilelements 600 hervor. Das Profilelement 600 umfasst ebenso wie das Profilelement 100 einen Auflagebereich und einen an diesen angrenzenden Klebebereich, der durch eine U-förmige Nut 630 gebildet wird. Auch bei dieser Nut 630 ist ein der Solarzelle 400 zugewandter Schenkel 110 kürzer ausgebildet und weist an seiner Oberseite eine Abrundung auf, während der die Nut 630 begrenzende äußere Schenkel 120 eine Länge aufweist, die im Wesentlichen der Höhe des inneren Schenkels 110 plus der Dicke der Solarzelle 400 entspricht. Auch in diesem Falle ist zwischen Solarzelle 400 und äußerem Schenkel 120 ein Spalt 109 vorgesehen, der durch die insbesondere elastische Klebemasse 500 ausgefüllt wird. Diese bildet zusammen mit der Solarzelle 400 und dem äußeren Schenkel 120 an der Oberseite des auf diese Weise gebildeten Solarzellenmoduls eine bündige Fläche aus. Ebenfalls vergleichbar mit dem Profilelement 100 ist eine Befestigungsnut 640 vorgesehen, sodass das Profilelement 600 an einem Befestigungsprofil 50 mit Hilfe eines Klemmelements 670, das in die Befestigungsnut 640 eingreift, befestigt werden kann. Insoweit wird auf die obigen Ausführungen zu dem Profilelement 100 Bezug genommen, die die entsprechenden Elemente des Profilelements 100 ausführlich erläutern. Im Unterschied zu dem Profilelement 100 ist der Träger 601, der die U-förmige Nut 630 und die Befestigungsnut 640 miteinander verbindet, geschwungen ausgebildet. Hierbei ist der Träger 601 zweifach in entgegengesetzter Richtung abgewinkelt, sodass die U-förmige Nut 630 und die Befestigungsnut 640 in der vertikalen Richtung zueinander versetzt angeordnet sind. Hierdurch wird der Auflagebereich für die Solarzelle 400 in Bezug auf den von den Profilelementen 600 gebildeten Rahmen weiter nach außen verschoben, sodass insgesamt die Fläche für die Solarzelle 400 vergrößert wird. Weiterhin wird durch die geschwungene Form des Trägers 601 eine größere Flexibilität des Profilelements 600 erreicht, die für die Stabilität und das Kippmoment des Profilelements 600 und des daraus gebildeten Rahmens vorteilhaft ist.

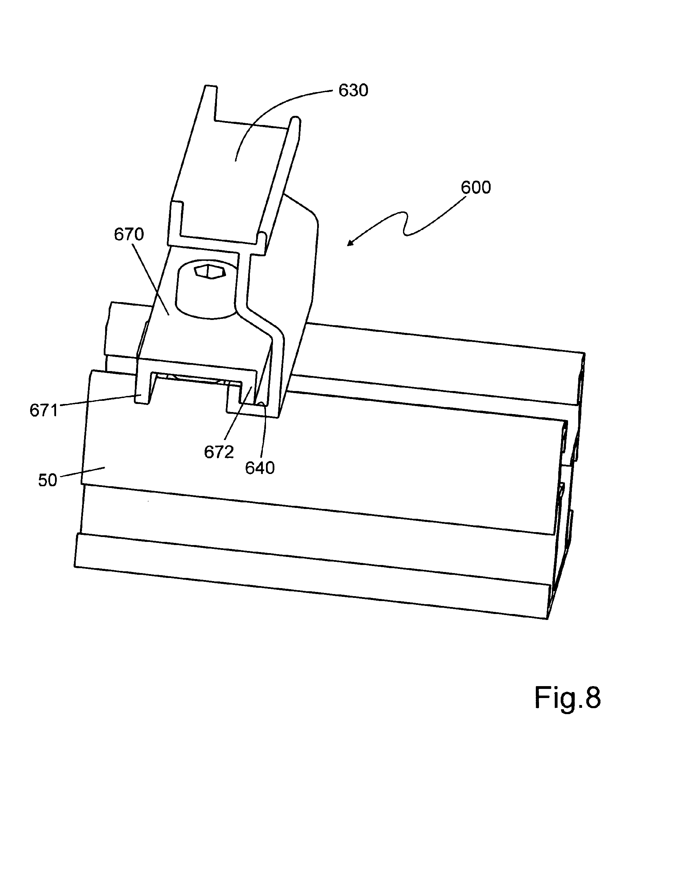

Figur 8 zeigt die Anordnung des erfindungsgemäßen Profilelements 600 auf dem Befestigungsprofil 50. Das Profilelement 600 ist mittels des Klemmelements 670 auf dem Befestigungsprofil 50 in an sich bekannter Weise befestigt. Hierbei liegt ein Schenkel 671 des Klemmelements 670 auf oberen Abschnitten des Befestigungsprofils 50 auf. Der andere Schenkel 672 des Klemmelements 670 greift in die Befestigungsnut 640 des Profilelements 600 ein und ist etwas kürzer als der Schenkel 671, um die Dicke der Wandung der Befestigungsnut 640 auszugleichen.

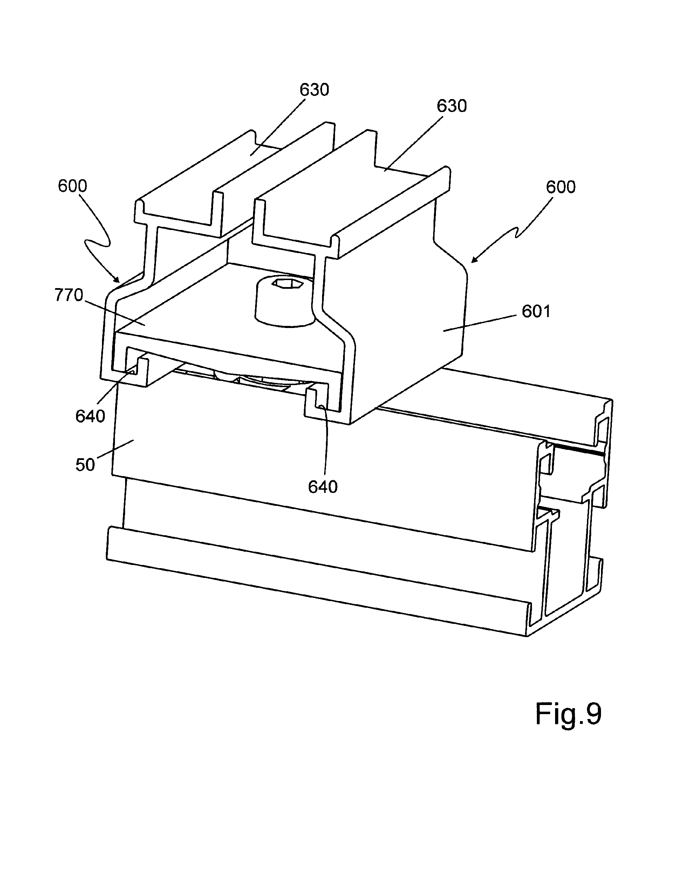

Aus Figur 9 geht die Befestigung von zwei aneinander angrenzenden Profilelementen 600 auf dem Befestigungsprofil 50 hervor. Das zur Befestigung der Profilelemente 600 vorgesehene Klemmelement 770 ist beispielsweise im Vergleich mit dem Befestigungselement 670 in der Breite vergrößert, um einen ausreichenden Abstand der von den Profilelementen 600 gebildeten Rahmen zu gewährleisten. Der die beiden in die Befestigungsnut 640 eingreifenden Schenkel des Klemmelements 770 verbindende Steg kann eine Materialverstärkung beispielsweise im zentralen Bereich aufweisen, um die Stabilität des Klemmelements 770 weiter zu erhöhen.

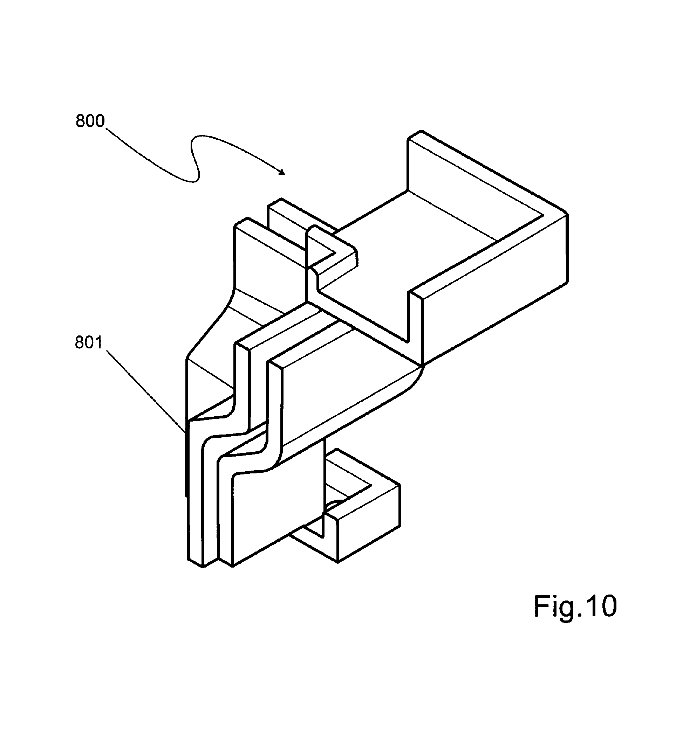

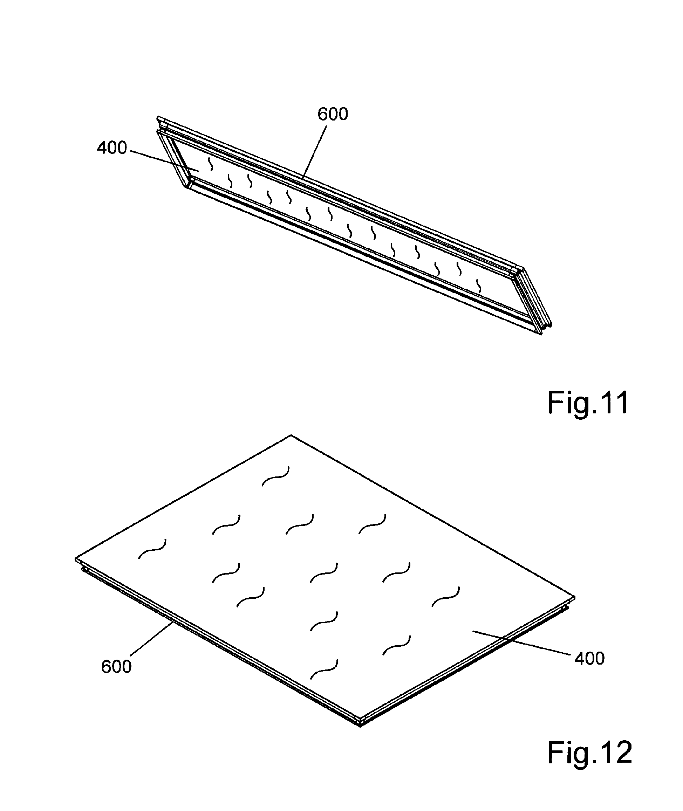

Aus Figur 10 geht eine isometrische Darstellung eines Eckverbindungselementes 800 hervor, das zur Herstellung eines geschlossenen Rahmens bei Verwendung der Profilelemente 600 vorgesehen ist. Zu erkennen ist die geschwungene Profilierung des Trägerelements 801 des Eckverbindungselements 800 in Anpassung an das Profil des Profilelements 600. Eine Gesamtansicht des Rahmens mit einer Solarzelle als Solarzellenmodul geht aus Figur 12 hervor.

Die Profilelemente 100; 600 bestehen bevorzugt aus Aluminium. Die Eckverbinder 200; 800 bestehen ebenfalls aus Aluminium, beispielsweise aus Druckgussteilen. Sie können rein prinzipiell auch aus Kunststoff bestehen.

Der große Vorteil der vorbeschriebenen Profilelemente und des Solarzellenmoduls liegt darin, dass die Profilelemente 100; 600 - zu einem Rahmen aufgebaut - eine Befestigungsmöglichkeit der Solarzelle 400 ohne übergreifenden Rahmen und damit Schmutzfänger ermöglichen. Vielmehr schließt die Solarzelle und der äußere U-Schenkel der Profilelemente 100; 600 bündig ab, wobei der dazwischenliegende Längenausdehnungsspalt 109 durch die Klebe- und Abdichtmasse 500 vollständig ausgefüllt ist. Hierdurch wird ein Ansammeln von Schmutz vollständig vermieden und bei einer Anordnung der Solarzellen 400 in schräger Position auf einem beispielsweise Satteldach wird so ein komplettes Abfließen von Regenwasser - gegebenenfalls auch schmutzbehaftetem Regenwasser - ermöglicht.

## Patentansprüche

1. Profilelement (100; 600) zur Befestigung von Solarzellen (400), insbesondere Fotovoltaikelementen, **gekennzeichnet durch** wenigstens einen der Solarzelle (400) zugewandten Auflagebereich und einen vorzugsweise an diesen angrenzenden Klebebereich.

2. Profilelement (100; 600) nach Anspruch 1, **dadurch gekennzeichnet, dass** der Auflagebereich und der Klebebereich durch eine der Solarzelle (400) zugewandte U-förmige Nut (130; 630) gebildet werden, wobei ein der Solarzelle (400) zugewandter U-Schenkel (110) eine etwas geringere Höhe aufweist und so eine Auflage für die Solarzelle (400) bildet, während der der Solarzelle (400) abgewandte U-Schenkel (120) eine Höhe aufweist, die der Höhe des der Solarzelle (400) zugewandten Schenkels (110) kleinerer Höhe plus der Dicke der Solarzelle (400) entspricht.

3. Profilelement (100; 600) nach Anspruch 2, **dadurch gekennzeichnet, dass** der U-Schenkel (110) kleinerer Höhe an seiner Oberseite abgerundet ist.

4. Profilelement (100; 600) nach Anspruch 1, 2 oder 3, **dadurch gekennzeichnet, dass** in die U-förmige Nut (130; 630) eine insbesondere elastische Klebe- und Dichtmasse (500) einbringbar ist.

5. Profilelement (100; 600) nach einem der vorstehenden Ansprüche, **dadurch gekennzeichnet, dass** auf der der U-förmigen Nut (130; 630) abgewandten Seite des Profilelements (100; 600) eine Befestigungsnut (140; 640) zur Aufnahme von vorzugsweise klemmenden Befestigungselementen (70; 670; 770) angeordnet ist.

6. Profilelement (100; 600) nach einem der vorstehenden Ansprüche, **dadurch gekennzeichnet, dass** es aus Aluminium besteht.

7. Profilelement (100; 600) nach einem der vorstehenden Ansprüche, **dadurch gekennzeichnet, dass** Eckverbindungselemente (200; 800) gleicher Profilierung vorgesehen sind, durch die die Profile (100; 600) zu einem geschlossenen Rahmen verbindbar sind.

8. Profilelement (100; 600) nach Anspruch 7, **dadurch gekennzeichnet, dass** die Eckverbindungselemente (200; 800) aus Aluminium bestehen.

9. Profilelement (600) nach einem der Ansprüche 5 bis 8, **dadurch gekennzeichnet, dass** zwischen der U-förmigen Nut (630) und der Befestigungsnut (640) ein geschwungener Träger (601) vorgesehen ist.

10. Solarzellenmodul, **gekennzeichnet durch** einen aus Profilelementen (100; 600) nach einem der Ansprüche 1 bis 9 gebildeten Rahmen und einer Solarzelle (400), insbesondere einem Fotovoltaikelement, das auf einem rahmenförmig umlaufenden Auflagebereich aufliegt und **durch** eine in einen ausgesparten Klebebereich eingebrachte Klebe-/Dichtmasse (500) befestigt ist.

11. Solarzellenmodul nach Anspruch 10, **dadurch gekennzeichnet, dass** der rahmenförmig umlaufende Auflagebereich und der Klebebereich durch eine der Solarzelle (400) zugewandte rahmenförmig umlaufende U-förmige Nut (130; 630) gebildet werden, wobei ein der Solarzelle (400) zugewandter U-Schenkel (110) eine etwas geringere Höhe aufweist und so eine Auflage für die Solarzelle (400) bildet, während der der Solarzelle (400) abgewandte U-Schenkel (120) eine Höhe aufweist, die der Höhe des der Solarzelle zugewandten Schenkels kleinerer Höhe plus der Dicke der Solarzelle (400) im Wesentlichen entspricht.

12. Solarzellenmodul nach Anspruch 11, **dadurch gekennzeichnet, dass** zwischen dem der Solarzelle (400) abgewandten U-Schenkel (120) und einer äußeren Kante der Solarzelle (400) ein Spalt (109) vorgebbarer Dicke vorgesehen ist, der durch die insbesondere elastische Klebe-/Dichtmasse (500) ausgefüllt ist.
